Europäisches Patentamt

European Patent Office

Office européen des brevets

(11) Numéro de publication: **0 394 814**

**A1**

(12) # DEMANDE DE BREVET EUROPEEN

(21) Numéro de dépôt: **90107299.1**

(22) Date de dépôt: **18.04.90**

(51) Int. Cl.⁵: **G09G 3/36, G04G 9/12**

(30) Priorité: **24.04.89 FR 8905512**

(43) Date de publication de la demande:
**31.10.90 Bulletin 90/44**

(84) Etats contractants désignés:
**CH DE GB IT LI NL**

(71) Demandeur: **ASULAB S.A.**
**Faubourg du Lac 6**
**CH-2502 Bienne(CH)**

(72) Inventeur: **Grupp, Joachim**
**Port-Roulant 12a**
**CH-2003 Neuchâtel(CH)**

(74) Mandataire: **Caron, Gérard et al**
**ICB Ingénieurs Conseils en Brevets SA**
**Passage Max. Meuron 6**
**CH-2001 Neuchâtel(CH)**

(54) **Cellule d'affichage électro-optique perfectionnée.**

(57) La cellule d'affichage à cristal liquide comprend une première zone d'affichage (7) constituée par une matrice de pixels (16). Chaque pixel peut être commandé par un circuit de commande dans un premier état optique ou dans un second état optique, chacun de ses états ayant des caractéristiques optiques différentes. Ainsi des pixels peuvent être commutés dans le premier état optique pour définir une information à afficher et les autres pixels dans le second état optique pour définir un fond. Selon l'invention, la cellule comprend en outre une seconde zone d'affichage (8) s'étendant au moins partiellement à la périphérie de la première zone (7) et reliée à un autre circuit de commande pour commuter cette seconde zone (8) dans ledit second état, lors de l'afficahge de l'information.

Fig. 4

EP 0 394 814 A1

L'invention concerne les cellules d'affichage électro-optiques et, plus particulièrement, les cellules d'affichage à cristal liquide présentant un contraste négatif, comprenant une structure d'affichage matricielle multiplexée.

Les cellules a cristal liquide sont généralement constituées d'un film de cristal liquide intercalé entre deux lames de verre recouvertes chacune sur leur faces en regard d'électrodes définissant une structure d'affichage matricielle. Les lames sont réunies entre elles par un cadre de scellement s'étendant le long du pourtour de ces dernières.

Les structures d'affichage matricielles équipant ce type de cellules comprennent généralement une pluralité d'électrodes s'étendant suivant des lignes parallèles sur la première lame, d'une part, et une autre pluralité d'électrodes s'étendant suivant des colonnes parallèles sur la seconde lame, d'autre part. Ces lignes et colonnes coopèrent les unes avec les autres pour définir, lorsque les lames sont assemblées, à leurs intersections des pixels d'affichage auxquels sont adressés des signaux électriques qui, selon le type de contraste choisi, rendent ces pixels sombres ou clairs et permettent ainsi d'afficher une information.

Il existe deux méthodes d'adressage classiques des signaux électriques à ces pixels, à savoir, l'adressage statique, et l'adressage multiplexé.

Dans le cas de l'adressage statique, on adresse à chaque pixel un signal électrique de commande modifiant l'état optique de ce dernier. Cette méthode d'adressage permet d'obtenir un bon ratio de contraste entre les pixels sélectionnés et les pixels non sélectionnés et par conséquent un affichage de bonne qualité. On entend par pixel sélectionné, un pixel commandé dans un état optique définissant l'information à afficher, et par pixel non sélectionné un pixel commandé dans un état optique définissant le fond sur lequel l'information est affichée. Cependant, dès que l'on désire afficher sur une cellule un grand nombre d'informations, on est amené à augmenter le nombre de lignes et de colonnes formant la structure matricielle.

Il en résulte rapidement une augmentation du nombre de pixels telle, que la connexion un à un de ces derniers devient fastidieuse voire impossible à réaliser pratiquement sans augmenter considérablement le coût de la cellule.

La seconde méthode d'adressage (adressage multiplexé) permet de remédier à cela. En effet, l'adressage multiplexé permet d'adresser un signal à un nombre important de pixels tout en nécessitant un nombre de connexions raisonnable, c'est-à-dire une connexion par ligne. Cette méthode présente toutefois des inconvénients, à savoir, plus le taux de multiplexage est élevé plus le ratio de contraste entre un pixel à l'état commuté et un pixel à l'état non commuté est faible. Il s'en suit que, dès que l'on atteint un taux de multiplexage élevé (de l'ordre de 4) la lisibilité de l'information diminue considérablement. En effet, les surfaces d'affichage des cellules à commande multiplexée présentent des caractéristiques de luminance différentes selon que l'on considère une partie de la surface d'affichage ne comprenant pas d'electrode (zone neutre), ou que l'on considère une partie de la surface d'affichage comprenant des electrodes reliées au circuit de commande et dans un état non commuté ou enfin selon que l'on considère la partie de la surface d'affichage comprenant des électrodes reliées au circuit de commande, ces dernières étant dans un état commuté pour définir une information à afficher. Il résulte de ces différences de luminance, des états optiques de la surface d'affichage de la cellule différents selon les parties de la surface d'affichage considérées.

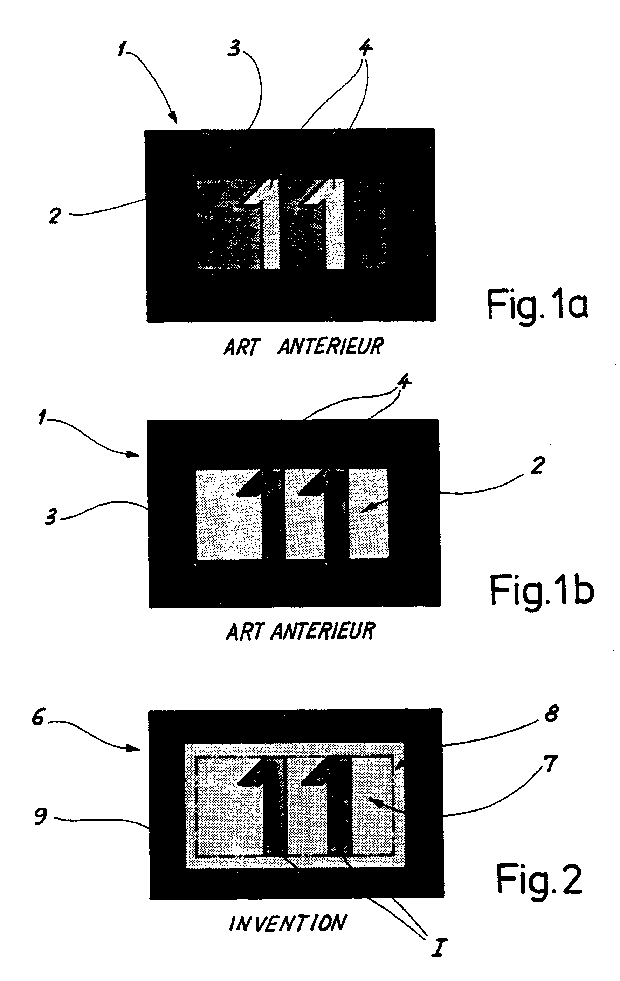

Ces différences de luminance sont néfastes à la qualité de l'affichage pour les raisons suivantes : quand on désire afficher une information, le circuit de commande délivre un signal de commande destiné à un ensemble de pixels afin de les sélectionner dans un premier état optique pour définir l'information à afficher tandis que les autres pixels se trouvent dans un second état optique pour définir le fond sur lequel l'information est affichée. Et dans ce cas, les pixels non sélectionnés voisins des pixels sélectionnés présentent une luminance intermédiaire entre la luminance des pixels à l'état sélectionné et la luminance de la surface d'affichage ne comprenant pas l'électrode, ceci étant dû à la tension parasite à laquelle sont soumis les pixels voisins du pixel sélectionné. Le phénomène est décrit dans l'article "Scanning Limitation of Liquid Crystal Displays" de PM Alt, paru dans la revue ITE Transaction on Electronic Devices, Vol. ED 21, No. 2, February 74. Cela se traduit par une diminution apparente du ratio de contraste entre l'ensemble du fond comprenant la zone neutre et les pixels non sélectionnés avec les pixels sélectionnés définissant l'information à afficher. De plus, ce phénomène est particulièrement accentué dans le cas de cellules d'affichage à cristal liquide fonctionnant en mode d'affichage à contraste négatif (affichage clair sur fond sombre, figure 1). Or, les cellules à cristal liquide à contraste négatif présentent des effets esthétiques intéressants notamment dans le domaine de l'horlogerie. Par exemple, ces cellules peuvent à la fois former un cadran de montre noir quand la cellule n'est pas commandée et faire apparaître une information à travers une fenêtre d'affichage d'informations quand la cellule est commandée de façon appropriée. Une telle cellule est décrite dans la demande de brevet EP 078 237 de la demanderesse.

L'invention a donc pour but de remédier aux inconvénients de l'art antérieur suscité en fournissant une cellule d'affichage électro-optique qui présente une lisibilité élevée de l'information affichée tout en utilisant un taux de multiplexage élevé.

A cet effet, l'invention a pour objet une cellule d'affichage à cristal liquide comprenant une première zone d'affichage constituée par une matrice de pixels, chaque pixel pouvant être commandé dans un premier état optique ou dans un second état optique, chacun de ses états ayant des caractéristiques optiques différentes, et un premier circuit de commande destinés à sélectionner des pixels dans le premier état optique pour définir une information à afficher et les autres pixels dans le second état optique pour définir un fond.

Conformément à l'invention, la cellule comprend en outre une seconde zone d'affichage s'étendant au moins partiellement à la périphérie de la première zone et qui est reliée à un second circuit de commande pour sélectionner cette seconde zone dans ledit second état, lors de l'affichage de l'information.

Grâce à ces caractéristiques, il est possible de réaliser une séparation visible entre les pixels définissant l'information et le reste de la cellule si bien que l'information affichée apparaît plus distinctement et devient ainsi plus lisible.

D'autres avantages et caractéristiques de l'invention apparaîtront à la lecture de la description qui suit de modes de réalisation de l'invention donnés à titre illustratif et non limitatif en liaison avec le dessin annexé dans lequel :

- les figures 1a et 1b sont des vues schematiques de cellules d'affichage à cristal liquide à contraste négatif selon l'art antérieur;

- la figure 2 est une vue schématique d'une cellule d'affichage à cristal liquide à contraste négatif selon l'invention;

- la figure 3 est une coupe d'une cellule d'affichage selon l'invention,

- la figure 4 est une vue schématique partielle agrandie de la surface d'affichage d'un premier mode de réalisation d'une cellule d'affichage et de son circuit de commande selon l'invention ;

- la figure 5 est une vue schématique partielle agrandie de la surface d'affichage d'un second mode de réalisation d'une cellule d'affichage et de son circuit de commande selon l'invention; et

- les figures 6a et 6b représentent respectivement une montre équipée d'une cellule d'affichage selon l'invention en mode affichage et en mode de non affichage.

En se référant tout d'abord aux figures 1a et 1b, on voit une cellule d'affichage à contraste négatif selon l'art antérieur désignée généralement par la référence numérique 1.

Plus particulièrement, la cellule illustrée à la figure 1a comprend deux zones 2 et 3, à savoir une zone d'affichage 2 comportant des électrodes et dans laquelle l'information 4 est affichée en clair sur fond sombre, et une zone neutre 3 ne comprenant pas d'électrodes, s'étendant à la périphérie de la zone d'affichage 2. Cette zone neutre 3 présente de façon générale un aspect sensiblement plus sombre que le fond de la zone d'affichage pour les raisons explicitées plus haut. Comme il ressort clairement de la figure, la lisibilité de l'information sur une telle cellule est faible et cela en raison de la faible différence entre les caractéristiques optiques du fond de la zone d'affichage 2 et celles de la zone neutre 3.

Dans le cas de la cellule représentée à la figure 1b, l'information 4 est affichée en sombre sur fond clair si bien que les pixels définissant les parties extrêmes inférieures et supérieures des caractères affichés sont adjacents à la zone neutre 3. Les pixels sélectionnés ayant sensiblement les mêmes caractéristiques optiques que la zone neutre, il en résulte un affichage de l'information qui ne se détache pas clairement de la zone neutre et qui, par conséquent, diminue la lisibilité de l'information.

En se référant maintenant à la figure 2, on voit une cellule 6 d'affichage à contraste négatif selon l'invention comprenant deux zones d'affichage 7, 8 (délimitée par des traits mixtes au dessin) et une zone neutre 9. Une première zone d'affichage 7 est constituée par une matrice de pixels (non représentée) destinée à réaliser l'affichage d'une information I au moyen d'une commande appropriée des pixels. Chaque pixel peut être commandé dans un premier état optique ou un second état optique chacun de ces deux états ayant des caractéristiques optiques différentes.

Selon l'invention et dans le cas d'une cellule à contraste négatif, les pixels qui apparaissent sombres sur la figure - c'est-à-dire les pixels sélectionnés dans le premier état optique - définissent l'information à afficher proprement dite et les pixels clairs - c'est-à-dire les pixels sélectionnés dans le second état optique - définissent le fond de la surface d'affichage 7. Toujours selon l'invention, la cellule comprend une seconde zone d'affichage 8 s'étendant sur la totalité de la périphérie de la première zone 7, la zone 8 étant commandée de sorte à avoir le même état optique que celui du fond de la première zone 7.

Cette deuxième zone 8 est intercalée entre la première zone 7 et la zone neutre 9 si bien que les parties extrêmes inférieures et supérieures des caractères affichés se détachent de la zone neutre 9 (qui a un état optique, voisin du premier état optique définissant l'information).

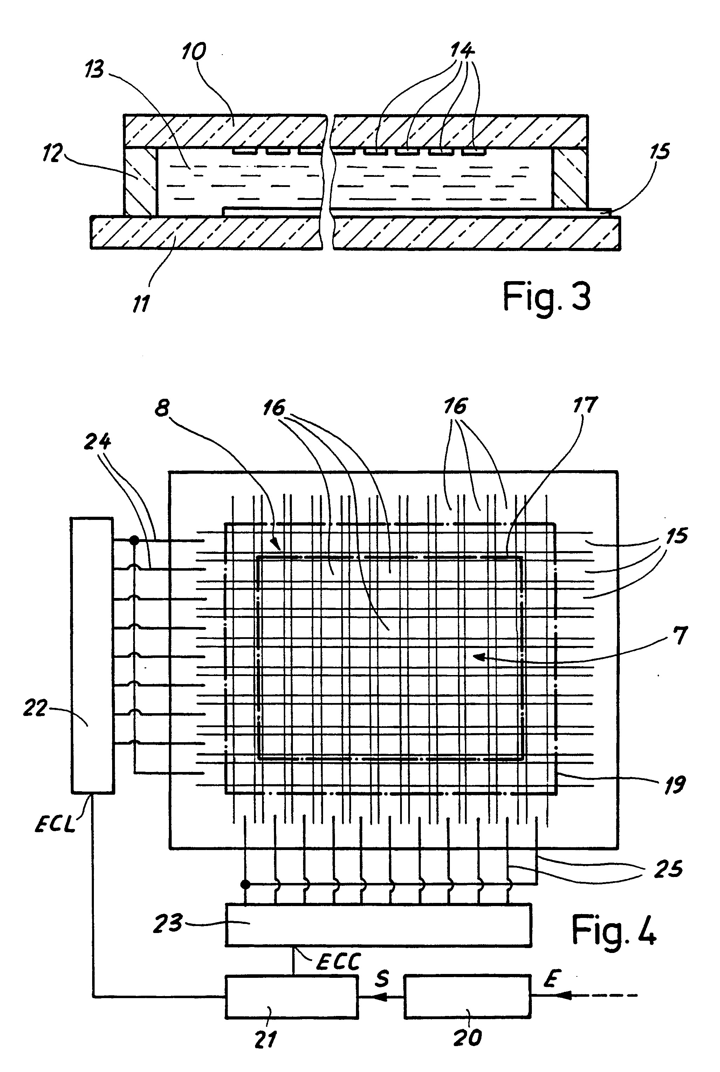

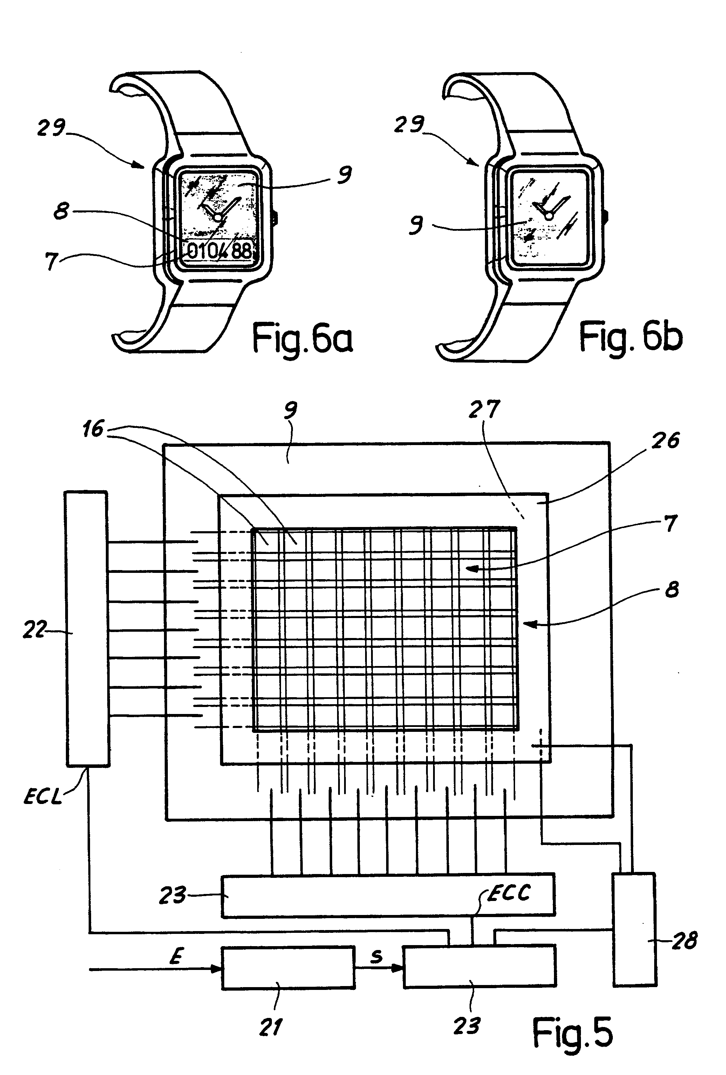

Comme il ressort des figures 3 et 4, la cellule comprend de manière connue une lame avant 10 transparente et une lame arrière 11 réunies entre elles par un cadre de scellement 12 définissant un volume étanche dans laquelle est emprisonné un mélange 13 composé d'un cristal liquide nématique et d'un colorant dichroïque.

Bien entendu, dans le cas où il s'agit de cellule à cristal liquide du type "super twisted nematic" ou "twisted nematic", il est possible d'utiliser, selon le cas, un ou plusieurs polariseurs.

La lame avant 10 porte sur sa face interne un ensemble d'électrodes 14 en forme de bande s'étendant parallèlement les unes aux autres ainsi qu'une couche d'alignement (non représentée).

Par ailleurs, la lame arrière 11 porte un ensemble de contre-électrodes 15 également en forme de bandes parallèles, mais s'étendant perpendiculairement à la direction des électrodes 14 portées par la lame avant 10. Ainsi, les intersections de ces ensembles d'électrodes définissent une matrice de pixels d'affichage 16 formant une surface d'affichage.

Il est à noter que le dessin ne reflète pas les dimensions exactes de l'ensemble ainsi formé, ces dimensions étant fortement exagérée pour plus de clarté.

En se référant plus particulièrement à la figure 4, on voit une cellule d'affichage selon l'invention reliée à son circuit de commande décrit plus en détail ci-après.

La surface d'affichage de la cellule comprend une première zone d'affichage 7 délimitée par le trait interrompu 17 à la figure. C'est dans cette première zone 7 qu'apparaît l'information que l'on désire afficher. Cette information est affichée par l'intermédiaire d'une commande appropriée de certains pixels de cette zone dans le premier état optique tandis que les autres pixels sont sélectionnés dans le second état optique définissant ainsi le fond sur lequel l'information apparaît.

Selon l'invention, la surface d'affichage comprend une seconde zone d'affichage 8 qui s'étend à la périphérie de la première zone 7 et qui est commandée de sorte que les pixels de cette seconde zone soient selectionnes dans un état optique identique à l'état optique du fond de la première zone d'affichage 7.

Dans ce mode de réalisation, la seconde zone d'affichage 8 a la configuration d'un cadre dont le pourtour extérieur est désigné par le trait interrompu 19 et dont le pourtour intérieur est désigné par le trait interrompu 17.

Ce cadre a ici la largeur d'un pixel mais peut bien entendu présenter une plus grande largeur selon les dimensions de l'ensemble de la surface d'affichage et/ou l'effet de contraste que l'on désire obtenir.

Enfin, le circuit de commande que l'on peut voir à la figure 4 comprend un circuit-mémoire 20 qui est relié à une entrée E pour pouvoir être alimenté. Ce circuit-mémoire envoie en sortie un signal S représentatif d'une information à afficher à l'entrée d'un décodeur 21 qui est relié en sortie d'une part a l'entrée ECL d'un circuit 22 de commande des électrodes en lignes et d'autre part à l'entrée ECC d'un circuit 23 de commande des électrodes en colonnes 23. Chaque circuit de commande 22, 23 de lignes et de colonnes comprend une pluralité de sorties 24, 25 reliées respectivement à l'ensemble des électrodes 14, 15 en lignes et en colonnes. Comme cela est représenté à la figure 4, dans une cellule comprenant n lignes d'électrodes et p colonnes d'électrodes, il est avantageux de court-circuiter la première ligne et la $n^{\text{ième}}$ ligne ensemble ainsi que la première colonne et la $n^{\text{ième}}$ colonne et de relier respectivement les lignes à une sortie unique du circuit de commande respectif des lignes 14 et des colonnes 15.

En se reportant à la figure 5, on voit un second mode de réalisation d'une cellule selon l'invention dans lequel on a désigné les éléments identiques à ceux décrits précédemment par des mêmes références numériques.

Alors que dans le mode de réalisation représenté à la figure 4, la seconde zone d'affichage 8 est constituée par un second ensemble de pixels bordant la première zone 7, dans le second mode de réalisation, la seconde zone 8 est définie par deux électrodes 26, 27 en regard l'une de l'autre portées respectivement par la lame avant et la lame arrière. Ces électrodes présentent la configuration d'un cadre qui circonscrit la première zone d'affichage 7.

Par ailleurs, on notera que le décodeur 21 comprend une sortie supplémentaire reliée à l'entrée d'un circuit de commande du cadre 28 séparé. Et le circuit de commande du cadre 28 a deux sorties directement reliées à l'électrode 26, d'une part, et à la contre-électrode 27 d'autre part, formant respectivement le cadre.

Enfin les figures 6a, 6b montrent une cellule à cristal liquide 6 selon l'invention appliquée à l'affichage de l'heure ou d'une autre information dans une montre bracelet 29.

La cellule 6 utilisée comprend donc une troisième zone 9 d'affichage (partie représentée en sombre à la figure) ne comprenant pas d'electrodes (zone neutre). Selon l'invention, cette troisième zone 9, séparée de la première zone d'affichage par un cadre, présente des caractéristiques optiques sensiblement identiques à celles des pixels définissant l'information dans la première zone d'affichage.

On voit donc clairement que grâce au cadre (seconde zone d'affichage) qui a le même état optique que celui du fond de la première zone d'affichage, on accentue l'effet de contraste et par conséquent on augmente la lisibilité de l'information tout en conférant à l'ensemble un effet esthétique original.

Bien entendu, la cellule selon l'invention n'est pas limitée à l'application dans une montre bracelet et elle peut être avantageusement appliquée dans divers domaines faisant intervenir l'affichage d'informations comme dans les calculatrices, des dispositifs de recherche de personnes, etc...

## Revendications

1. Cellule d'affichage à cristal liquide comprenant une première zone d'affichage (7) constituée par une matrice de pixels (16), chaque pixel pouvant être commande dans un premier état optique ou dans un second état optique, chacun de ses états ayant des caractéristiques optiques différentes, et un premier circuit de commande destinés à commuter des pixels dans le premier état optique pour définir une information à afficher et les autres pixels dans le second état optique pour definir un fond, caracterisée en ce qu'elle comprend en outre une seconde zone d'affichage (8) s'étendant au moins partiellement à la périphérie de la première zone (7) et reliée à un second circuit de commande pour commuter cette seconde zone (8) dans ledit second état, lors de l'affichage de l'information.

2. Cellule selon la revendication 1, caractérisée en ce que le second circuit de commande de la seconde zone d'affichage et le premier circuit de commande de la première zone d'affichage sont un même circuit.

3. Cellule selon la revendication 1 ou 2, caractérisée en ce que la seconde zone d'affichage est définie par les pixels (16) périphériques de la matrice, cette seconde zone présentant une largeur d'au moins un pixel.

4. Cellule selon la revendication 1 ou 2, caracterisée en ce que la seconde zone d'affichage est definie par deux électrodes (26, 27) disposées en regard l'une de l'autre sur les lames avant et arrière (10, 11) respectivement, ces électrodes ayant la configuration d'un cadre entourant ladite matrice (16).

5. Cellule selon la revendication 3 comprenant n lignes d'électrodes (14) et p colonnes d'électrodes (15), caractérisée en ce que la première ligne et la $n^{ième}$ ligne respectivement la première colonne et la $p^{ième}$ colonne sont reliées électriquement entre elles.

6. Cellule selon l'une quelconque des revendications précédentes comprenant une troisième zone d'affichage (9) ne comprenant pas d'electrodes et s'étendant autour de la seconde zone (8) d'affichage, caractérisée en ce que l'état optique des pixels de la première zone (7) définissant l'information à afficher et la troisième zone d'affichage (9) présentent des caractéristiques optiques sensiblement identiques.

7. Cellule d'affichage selon l'une quelconque des revendications précédentes, caractérisée en ce qu'elle présente un contraste négatif.

8. Cellule selon la revendication 7, caractérisée en ce que le cristal liquide comprend un colorant dichroïque.

9. Montre caractérisée en ce qu'elle comprend une cellule d'affichage selon l'une quelconque des revendications 1 à 8.

Fig.1a

ART ANTERIEUR

Fig.1b

ART ANTERIEUR

Fig.2

INVENTION

Fig. 3

Fig. 4

EP 0 394 814 A1

Fig.6a

Fig.6b

Fig.5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | PATENT ABSTRACTS OF JAPAN, vol. 12, no. 112 (P-687)[2959], 9 avril 1988, page 53 P 687; & JP-A-62 240 929 (MATSUSHITA ELECTRIC IND. CO., LTD) 21-10-1987 * En entier * --- | 1,3 | G 09 G    3/36 G 04 G    9/12 |
| A | PATENT ABSTRACTS OF JAPAN, vol. 7, no. 67 (P-184)[1212], 19 mars 1983, page 79 P 184; & JP-A-57 211 095 (AKIHIRO ITOU) 24-12-1982 * En entier * --- | 1 | |
| A,D | EP-A-0 078 237   (ASULAB S.A.) * Figure 1; abrégé; page 6, ligne 26 - page 9, ligne 26; page 11, ligne 18 - page 12, ligne 15 * --- | 1,6,8,9 | |
| P,X | GB-A-2 214 342   (MITSUBISHI) * Figures 5-6,14; Abstract; page 4, ligne 1 - page 6, ligne 20 * ----- | 1-4 | **DOMAINES TECHNIQUES RECHERCHES (Int. Cl.5)** G 09 G G 04 G |

Le présent rapport a été établi pour toutes les revendications

| Lieu de la recherche | Date d'achèvement de la recherche | Examinateur |
|---|---|---|
| LA HAYE | 03-07-1990 | VAN ROOST L.L.A. |

EPO FORM 1503 03.82 (P0402)